**Europäisches Patentamt**

**European Patent Office**

**Office européen des brevets**

(11) Veröffentlichungsnummer : **0 337 934 B1**

(12) # EUROPÄISCHE PATENTSCHRIFT

(45) Veröffentlichungstag der Patentschrift :
**02.12.92 Patentblatt 92/49**

(51) Int. Cl.$^5$ : **D21F 3/08**

(21) Anmeldenummer : **89810166.2**

(22) Anmeldetag : **03.03.89**

(54) **Metallische Papierglättwalze für eine Papiermaschine.**

(30) Priorität : **13.04.88 CH 1361/88**

(43) Veröffentlichungstag der Anmeldung :
**18.10.89 Patentblatt 89/42**

(45) Bekanntmachung des Hinweises auf die
Patenterteilung :
**02.12.92 Patentblatt 92/49**

(84) Benannte Vertragsstaaten :
**DE FR GB SE**

(56) Entgegenhaltungen :
**GB-A- 363 025**
**GB-A- 1 042 987**
**GB-A- 2 180 624**
**US-A- 3 942 230**

(73) Patentinhaber : **GEBRÜDER SULZER
AKTIENGESELLSCHAFT
Zürcherstrasse 9
CH-8401 Winterthur (CH)**

(72) Erfinder : **Barbezat, Gerard
Müliwiesstrasse 39
CH-8487 Zell (CH)**
Erfinder : **Walser, Bruno, Dr.
Schauenbergstrasse 10
CH-8352 Räterschen (CH)**

EP 0 337 934 B1

Jouve, 18, rue Saint-Denis, 75001 PARIS

## Beschreibung

Die Erfindung betrifft eine metallische Papierglättwalze für eine Papiermaschine mit einer aus Granitpulver bestehenden, glättenden Oberfläche.

Es sind Papierglättwalzen für Papiermaschinen bekannt, deren glättende Oberfläche aus synthetischen oder künstlichen Graniten bestehen (M. Suguri et al: "Study on artificial granite roll with improved releasing ability for wet paper"; Japan Pulp & Paper, Aug. 1983, Seite 77-84). Bei diesen bekannten Walzen besteht die glättende Oberfläche aus Steinpulver, dessen Hauptbestandteile Feldspat und Quarz sind. Als Bindemittel der einzelnen Körner des Pulvers untereinander dient ein spezielles Polyurethan, das nicht näher beschrieben wird.

Ferner ist eine metallische Walze aus der US-PS-3942230 bekannt, deren Oberfläche aus einer Kunststoffschicht besteht die auf eine poröse Schicht aus thermisch aufgespritztem Metall- oder Keramikpulver aufgebracht ist. Im Gegensatz zu Walzen mit Oberflächen aus Steinpulver weisen die Kunststoffoberflächen eine relativ geringe Verschleissfestigkeit auf.

Aufgabe der Erfindung ist es, die mechanischen Eigenschaften derartiger synthetischer Granitschichten, z.B. die Verschleissfestigkeit, zu verbessern und die Ablösung des nassen Papiers von der Walze zu erleichtern.

Diese Aufgabe wird mit der Erfindung dadurch gelöst, dass die glättende Oberfläche aus einer thermisch aufgespritzten, weitgehend amorphen Granitschicht besteht.

Die thermisch, in erster Linie durch Plasmaspritzen aufgebrachte, weitgehend amorphe Granitschicht weist gegenüber Schichten, bei denen Pulver mittels Klebstoffen gebunden werden, ein wesentlich homogeneres Gefüge auf, das auf der ganzen Oberfläche gleich- und regelmässig ist. Daraus ergeben sich relativ hohe Verschleissfestigkeit und lange Lebensdauer. Darüberhinaus hat eine thermisch aufgespritzte Schicht eine gewisse Porosität, die vorteilhafterweise zwischen 3 und 15 Volumenprozent liegt. Diese Porosität fördert und begünstigt die Ablösung der geglätteten Papierbahnen von der Walze.

Die weitgehend amorphe Gefügestruktur wird durch hohe Abkühlungs-und Erstarrungsgeschwindigkeiten des thermisch - auf die im allgemeinen aus Stahl bestehenden Walzen-Grundkörper - aufgespritzten verflüssigten Granitpulver erreicht. Dass diese Struktur weitgehend amorph ist, kann in bekannter Weise, beispielsweise durch Röntgenfeinstruktur-Analysen, nachgewiesen werden. Eine Möglichkeit, eine gewünschte Abkühlungsgeschwindigkeit zu erreichen, besteht beispielsweise darin, die Masse des metallischen Substrates, Schichtdicke der Granitschicht und/oder Termperatur- und "Fahrgeschwindigkeit" des Plasmastrahles relativ zum Substrat so aufeinander abzustimmen, dass die Walzenmasse eine genügend schnelle Wärmeabfuhr gewährleistet.

Zusammensetzung des Flamm- oder Plasmastrahles, der frei von Sauerstoff ist und beispielsweise aus einem Argon/Wasserstoff-Gemisch bestehen kann, eine Kontrolle seiner Temperatur sowie Ort und Art der Einspeisung des gemahlenen Granitpulvers in den Plasmastrahl können vorteilhafterweise so gewählt und/oder beeinflusst werden, dass in der aufgespritzten Schicht die chemische Zusammensetzung mindestens möglichst weitgehend der Zusammensetzung des Ursprungspulvers entspricht.

Im folgenden wird die Erfindung anhand eines Ausführungsbeispiels näher erläutert.

Als Substrat für die aufzuspritzende Granitschicht dient ein massiver Walzengrundkörper aus normalisiertem unlegierten Baustrahl 37 mit eine Durchmesser von 40 mm. Selbstverständlich ist es auch möglich, einen hohlen Walzenkörper zu verwenden. Zur Gewährleistung einer für ein amorphes Gefüge genügend raschen Abkühlung einer aufgespritzten Schicht von 1 mm sollte die Wandstärke der hohlen Wände jedoch mindestens 10 mm betragen.

Die zu beschichtende Walzenoberfläche kann gegebenenfalls durch Sandstrahlen mit Korund ($Al_2O_3$)-Körnern aufgerauht und aktiviert sein, um die Haftung der aufgespritzten Schicht zu verbessern.

Das zu verspritzende Granitpulver besteht aus einem natürlichen Granit, der im wesentlichen Quarz ($SiO_2$), Plagioklas (($NaCa$)$Al_2Si_2O8$) und Kalifeldspat (($K,Na$)$AlSi_3O_8$) enthält. Es ist durch Mahlen und Sieben zu einem Pulver mit Korngrössen von 20 bis 60 um verarbeitet worden. Experimente haben gezeigt, dass die vorstehend genannten Korngrössen in der verwendeten Anlage und unter den gewählten Bedingungen die besten Resultate für amorphe Granitschichten reproduzierbar erreichen lassen. Grössere Korngrössen bis etwa 100 um sind zulässig, ergeben aber in der Reproduzierbarkeit der Schichten grössere Schwankungen.

Mit Hilfe eines handelsüblichen Pulverzuführgerätes wird das auf die genannten Korngrössen eingegrenzte Granitpulver in den Plasmastrahl einer ebenfalls auf dem Markt erhältlichen Plasmaspritzanlage eingebracht. In diesem Strahl werden die Pulverpartikel aufgeschmolzen und mit hoher Beschleunigung und Geschwindigkeit auf das Substrat projiziert.

Für die Erzeugung eines amorphen Granitgefüges werden in der Anlage folgende Parameter eingestellt:
Gaszufuhr:    Argon (Ar) 40 l/min

Wasserstoff ($H_2$) 10 l/min
Strom:       I = 650 A
Spannung:    V = 75 V

Die Injektion des Pulvers erfolgt quer, d.h. in einem Winkel von 90° zu dem Plasmastrahl in einem Abstand von etwa 10 bis 15 mm vor dem Düsenausgang der Plasmaspritzpistole. Der Abstand vom Düseneingang zum Substrat beträgt etwa 70 mm. Die Verweilzeit des Pulvers im Plasmastrahl ist somit extrem kurz und beträgt etwa 0,2 bis 1 Millisekunden (ms). Innerhalb dieser Zeit muss - um ein amorphes Gefüge der Beschichtung zu erkalten - das kristalline Gefüge des Granitpulvers vollständig aufgeschmolzen werden. Es sind daher hohe Plasmastrahl-Temperaturen erforderlich, die in der "Flugbahn" der Pulverkörner Werte zwischen 5000 und 10'000 K annehmen.

Durch die Rotation des Substrates um eine horizontale Achse mit einer Umfangsgeschwindigkeit von 30 m/min und eine gleichmässige Seitwärtsbewegung der Spritzdpistole mit einem Vorschub von 5 mm pro Umdrehung um die horizontale Achse wird bei einem einmaligen "Durchgang" eine gleichmässige Granitschicht von 0,05 mm Dicke errreicht, wobei die Abkühlungsgeschwindigkeit etwa 500 mm/sec beträgt. Sie ist in gewissen Grenzen durch eine Erhöhung der Rotationsgeschwindigkeit des Substrates zu variieren. Durch wiederholte Passagen wird eine Enddicke der Granitschicht von 0,5 mm erreicht; ihre Porosität beträgt etwa 5 Vo.%.

Temperaturmessungen an der beschichteten Oberfläche und dem Inneren des Substrates unmittelbar nach dem Erstarren der Granitschicht gemessen, ergeben Werte

an der Oberfläche von       200 °C
im Substrat von max.        150 °C.

Eine Ueberhitzung der Schicht und/oder des Substrates ist daher nicht beobachtet worden.

Die bereits erwähnte Anlayse der Schicht mittels Röntgenfeinstrukturen zeigt eine relativ glatte Schichtoberfläche mit einer Gefügestruktur, die zu etwa 95 % amorph ist. Eine Anlayse ihrer Zusammensetzung ergibt, dass diese gegenüber dem Ausgangspulver praktisch unverändert geblieben ist.


## Patentansprüche

1. Metallische Papierglättwalze für eine Papiermaschine mit einer aus Granitpulver bestehenden, glättenden Oberfläche, **dadurch gekennzeichnet, dass** die glättende Oberfläche aus einer thermischaufgespritzten, weitgehend amorphen Granitschicht besteht.

2. Papierglättwalze nach Anspruch 1, **dadurch gekennzeichnet, dass** die Schichtdicke der Granitschicht 0,05 bis 1 mm beträgt.

3. Papierglättwalze nach Anspruch 1 oder 2, **dadurch gekennzeichnet dass** die aufgespritzte Granitschicht eine Porosität von 3 - 15 Vol.% aufweist.

4. Papierglättwalze nach den Ansprüchen 2 und 3, **dadurch gekennzeichnet dass** die aufgespritzte Granitschicht eine Dicke von 0,1 bis 0,6 mm und eine Porosität von 5 - 8 Vol.% aufweist.

5. Verfahren zur Herstellung einer Papierglättwalze nach einem der Ansprüche 1 bis 4, **dadurch gekennzeichnet, dass** die Granitschicht auf einen metallischen Walzen-Grundkörper durch Plasmaspritzen eines Granitpulvers aufgebracht wird, dessen Pulverkörner im Plasmastrahl vollständig aufgeschmolzen werden, wobei die Masse des metallischen Substrates, Schichtdicke der Granitschicht und/oder Temperatur- und "Fahrgeschwindigkeit" des Plasmastrahles relativ zum Substrat so aufeinander abgestimmt werden, dass die Walzenmasse eine genügend schnelle Wärmeabfuhr gewährleistet.

6. Verfahren nach Anspruch 5, **dadurch gekennzeichnet, dass** der Plasmastrahl aus einem sauerstofffreien Gasgemisch gebildet wird.

7. Verfahren nach Anspruch 5 oder 6, **dadurch gekennzeichnet, dass** die Abkühlungs- und Erstarrungsgeschwindigkeit der flüssigen Granitschicht mindestens 400 mm/sec beträgt.


## Claims

1. A metallic paper smoothing roll for a papermaking machine with a smoothing surface comprising granite

3

powder, characterised in that the smoothing surface comprises a thermally sprayed-on, largely amorphous granite layer.

2.  A paper smoothing roll as claimed in claim 1, characterised in that the thickness of the granite layer is 0.05 to 1 mm.

3.  A paper smoothing roll as claimed in claim 1 or 2, characterised in that the sprayed granite layer has a porosity of 3 to 15 % by volume.

4.  A paper smoothing roll as claimed in claims 2 and 3, characterised in that the sprayed granite layer has a thickness of 0.1 to 0.6 mm and a porosity of 5 to 8 % by volume.

5.  A method of manufacturing a paper smoothing roll as claimed in any of claims 1 to 4, characterised in that the granite layer is applied to a metal roll base member by plasma spraying of a granite powder, of which the powder granules are completely melted in the plasma jet, the material of the metal substrate, thickness of the granite layer and/or temperature and "travelling speed" of the plasma jet relative to the substrate being so selected in relation to one another that the roll material ensures sufficiently rapid dissipation of heat.

6.  A method as claimed in claim 5, characterised in that the plasma jet is formed by an oxygen-free gas mixture.

7.  A method as claimed in claim 5 or 6, characterised in that the cooling and setting speed of the fluid granite layer is at least 400 mm/sec.

## Revendications

1.  Rouleau lisseur métallique pour machine à papier, ayant une surface lisseuse en poudre de granit, caractérisé en ce que la surface lisseuse consiste en une couche de granit pratiquement amorphe, pulvérisée par voie thermique.

2.  Rouleau lisseur de papier selon la revendication 1, caractérisé en ce que l'épaisseur de la couche de granit est de 0,05 à 1 mm.

3.  Rouleau lisseur de papier selon la revendication 1 ou 2, caractérisé en ce que la couche pulvérisée de granit a une porosité de 3 - 15 % en volume.

4.  Rouleau lisseur de papier selon les revendications 2 et 3, caractérisé en ce que la couche pulvérisée de granit a une épaisseur de 0,1 à 0,6 mm et une porosité de 5 - 8 % en volume.

5.  Procédé de production d'un rouleau lisseur de papier selon l'une des revendications 1 à 4, caractérisé en ce que la couche de granit est déposée sur un corps de base, formé d'un rouleau métallique, par projection dans un plasma d'une poudre de granit dont les grains sont mis totalement en fusion dans le jet de plasma, la masse du substrat métallique, l'épaisseur de la couche de granit et/ou la température et la "vitesse de marche" du jet de plasma étant réglées les unes en fonction des autres par rapport au substrat de manière que la masse du rouleau garantisse une évacuation suffisamment rapide de la chaleur.

6.  Procédé selon la revendication 5, caractérisé en ce que le jet de plasma est formé d'un mélange gazeux exempt d'oxygène.

7.  Procédé selon la revendication 5 ou 6, caractérisé en ce que la vitesse de refroidissement et de solidification de la couche liquide de granit est d'au moins 400 mm/sec.